# EUROPÄISCHE PATENTSCHRIFT

(11) **EP 3 397 577 B1**
(45) Veröffentlichungstag und Bekanntmachung des Hinweises auf die Patenterteilung: **05.08.2020**
(21) Anmeldenummer: 17700320.9
(22) Anmeldetag: 10.01.2017
(51) Int. Cl.: B65G 47/86, B67C 3/24

(54) **GREIFARM FÜR BEHÄLTER UND GREIFVORRICHTUNG MIT DERARTIGEN GREIFARMEN**
GRIPPER ARM FOR CONTAINERS AND GRIPPER DEVICE HAVING SUCH GRIPPER ARMS
BRAS DE PRÉHENSION POUR CONTENANTS ET DISPOSITIF DE PRÉHENSION COMPRENANT DES BRAS DE PRÉHENSION DE CE TYPE

(43) Veröffentlichungstag der Anmeldung: 07.11.2018
(73) Patentinhaber: Tyrolon-Schulnig GmbH, 6395 Hochfilzen (AT)
(72) Erfinder: SCHULNIG, Ludwig, 6392 St. Jakob in Haus (AT)
(74) Vertreter: Rupprecht, Kay
(86) Internationale Anmeldenummer: PCT/EP2017/050383
(87) Internationale Veröffentlichungsnummer: WO 2018/130266

(56) Entgegenhaltungen:
- DE-A1- 19 542 337
- DE-U1- 29 915 927
- KR-B1- 101 186 256
- US-B1- 8 672 376

## Beschreibung

Die vorliegende Erfindung betrifft einen Greifarm für eine Vorrichtung zum Greifen, Halten und Führen von insbesondere flaschenartigen Behältern sowie eine Greifvorrichtung mit derartigen Greifarmen. Hierbei bildet der Greifarm einen Teil einer Vorrichtung, welche zum Bewegen eines Greifabschnitts des Greifarms von einer Öffnungsstellung in eine Greifstellung oder umgekehrt ein Steuermittel aufweist. Der Greifarm selbst weist eine Bohrung zur Lagerung eines Lagerbolzens zum schwenkbaren Befestigen des Greifarms in der Vorrichtung, und einen Kraftspeicher zum Bewegen des Greifabschnitts des Greifarms von der Greifstellung in die Öffnungsstellung oder umgekehrt auf.

Unter dem Begriff "Behälter" sind nachstehend insbesondere, aber nicht ausschließlich flaschenartige Behälter zu verstehen, also zum Beispiel Getränkeflaschen aus Glas oder Kunststoff, aber auch Fläschchen für Arzneimittel oder Parfüm. Unter den Begriff fallen ebenfalls andere Glas- oder Kunststoffbehälter, die ähnlich zu einer Flasche insbesondere einen Hals oder eine zur Öffnung verjüngende Struktur aufweisen.

Ein solcher Greifarm ist dem Grunde nach aus dem Stand der Technik bekannt und wird bei der fließbandtechnischen Bearbeitung von Behältern verwendet. Insbesondere beim Reinigen, Befüllen oder Verschließen werden die Behälter bei einer Eingangsstation mittels einer Greifvorrichtung mit mindestens einem Greifarmpaar ergriffen und zur nächsten Station im Prozess transportiert.

Eine solche Vorrichtung ist beispielsweise in der Patentanmeldeschrift WO2006/089610 offenbart. Die darin beschriebene Greifvorrichtung, dort "Klammergreifer" genannt, ist für ein Gefäßtransportsystem vorgesehen, wobei die Greifvorrichtung zwei Greifarme besitzt und zwischen einer Greifstellung und einer Öffnungsstellung wechseln kann. Für den Freigabe- bzw. Öffnungsprozess der Greifvorrichtung, d.h. für den Wechsel von der Greifstellung in die Öffnungsstellung der Greifarme, bedarf es eines Öffnungsmittels, z.B. in Form einer Spiralfeder oder eines sich abstoßenden Magnetpaars, das eine Kraft auf die zwei Greifarme ausübt und die Greifvorrichtung dadurch öffnet. Die Greifarme weisen normalerweise eine vordefinierte Ausgangsstellung auf, in die sie automatisch zurückkehren, wenn keine Kraft von einer Steuereinheit auf sie wirkt. Wie auch allgemein aus dem Stand der Technik bekannt, ist die Steuereinheit dabei als mechanisch wirkender Steuernocken ausgeführt, dessen Kraft und damit überwiegend auch die Auslenkung der Greifarme durch ein Federungsmittel in Form einer an jedem Greifarm befestigten Blattfeder ausgeglichen bzw. abgefedert wird. Das Federungsmittel hilft den Greifarmen dabei, Materialtoleranzen von zu greifenden Behältern oder durch einen schief stehenden Behälter hervorgerufene Abweichungen der Greifweite auszugleichen und damit ein sicheres Greifen zu ermöglichen und Beschädigungen des Behälters zu vermeiden.

Eine ähnliche und ebenfalls bekannte Greifvorrichtung wird in der Deutschen Gebrauchsmusterschrift DE 20 2005 002 924 U beschrieben. Hierbei wird als Öffnungsmittel eine Feder verwendet, um ein Greifarmpaar zu öffnen.

DE 299 15 927 U1 bezieht sich auf einen Flaschengreifer, insbesondere für eine Flaschen-Transportvorrichtung, mit zwei Greifarmen, von denen jeder ein Greifende und ggf. ein Betätigungsende aufweist, und die relativzueinander zangenartig bewegbar gehaltert sind, und mit wenigstens einem drehverstellbaren, eine Anlagefläche mindestens eines Greifarms beaufschlagenden Betätigungsnocken. Dabei beaufschlagt der Betätigungsnocken die Anlagefläche indirekt über einen Gleitklotz, der wenigstens eine die Anlagefläche flächig kontaktierende Gleitfläche aufweist. DE 299 15 927 U1 offenbart den Oberbegriff des Anspruchs 1.

US 8,672,376 B1 ist auf einen Greifer gerichtet, der als eine einzelne Komponente ausgebildet ist. Der Greifer umfasst einen Reifenabschnitt, der einander zugewandte Arme verbindet. Jeder Arm kann ein Zapfenende, ein Backenende und einen Zapfen zwischen den Zapfen- und Backenenden aufweisen und an dem Bügelabschnitt an dem Drehpunkt befestigt sein, um schwenkbar zu sein, um die Größe einer Backenöffnung zu ändern, die durch die Backenenden definiert ist. Der Reifenabschnitt wird im Gebrauch zyklisch belastet und konfiguriert, um als ein Belastungszentrum für den Greifer zu wirken und einen Fehlerpunkt zum stetigen Einleiten eines Fehlerrisses in den Reifenabschnitt zum Zeitpunkt des Versagens des Greifers bereitzustellen. Jeder der einander zugewandten Arme ist an einer Basis anbringbar, so dass die gebrochenen Teile des Greifers beim Versagen an der Basis gehalten werden.

Allerdings bringen die zuvor genannten Greifvorrichtungen des Standes der Technik in einer nicht staubfreien Umgebung Hygieneprobleme mit sich, was sich insbesondere beim Einsatz in hygienesensitiven Bereichen wie dem Abfüllen von Getränken, Säften oder Babynahrung als nachteilig erweist. Denn die vorstehend beschriebenen Einzelteile eines aus dem Stand der Technik bekannten Greifarms, insbesondere die Spiralfeder und die Blattfeder mit ihren jeweiligen Befestigungsmitteln, aber auch die einzusetzenden Magnete, sammeln Staub und/oder andere Verschmutzungen an, wodurch sich unerwünschte Keime festsetzen können.

Ebenso ist die Anzahl der Einzelteile des Greifarms sowohl für die Herstellung und Montage, als auch für die Wartung und Reinigung von Nachteil. Hierbei müssen logistische Aufträge und Lieferungen erfolgen, um alle Komponenten zu erhalten und den Greifarm fertigstellen bzw. warten zu können. Außerdem bedarf es zusätzlicher Montageschritte, um den Greifarm zusammenzusetzen.

Der Erfindung liegt die Aufgabe zugrunde, einen Greifarm bereitzustellen, der ohne weiteres ausreichend frei von Verschmutzungen und Keimen gehalten werden kann und so wenige Einzelteile wie möglich aufweist.

Die gestellte Aufgabe wird bei einem eingangs genannten Greifarm dadurch gelöst, dass der Kraftspeicher eine integral am Greifarm ausgebildete und elastisch auslenkbare Federzunge aufweist, die mit einer Federzunge eines gegengleich ausgebildeten Greifarms der Vorrichtung in Wirkeingriff steht oder kommt.

Unter dem Begriff "integral" versteht man insbesondere dazugehörend oder zusammenhängend. Unter dem Begriff "Federzunge" versteht man insbesondere, aber nicht ausschließlich ein elastisches oder gefedertes Endstück, das auf Grund seiner materiellen und/oder strukturellen Beschaffenheit entlang mindestens eines Teils seiner Länge biegbar ist und im Falle keiner äußeren Krafteinwirkung wieder in eine Ausgangs-/Grundposition zurückgeht bzw. -fällt. Hierbei ist ein Ende der Federzunge frei bzw. ungebunden ausgebildet und das gegenüberliegende Ende an einem Gegenstand, in diesem Fall dem Greifarm, befestigt oder ausgebildet. Vorzugsweise hat die Federzunge lediglich einen Biegefreiheitsgrad, d.h. die Federzunge lässt sich im Wesentlichen nur entlang einer Ebene biegen. Dabei ist die Federzunge vorzugsweise derart beschaffen, dass unabhängig vom Ort der Krafteinwirkung an der Federzunge im Wesentlichen die komplette Breite gleichmäßig ausgelenkt wird und somit keine, zumindest keine beträchtliche, Verdrehung entlang der Achse bzw. der Länge der Federzunge erfolgt. Dadurch agiert die als Kraftspeicher fungierende Federzunge bei einem Wirkeingriff stabiler und wirkt im gespannten oder ausgelenktem Zustand eine Kraft auf oder vom Greifarm weg.

Die bei herkömmlichen Greifarmen regelmäßig zum Einsatz kommenden separaten Federn oder Magnetpaare entfallen somit, wodurch eine wesentlich hygienischere, einteilige Bauform des Greifarms ohne Verschmutzungen anziehende Querbohrungen, Sacklöchern oder ähnlicher Aufnahmen für Kraftspeicher erzielbar ist. Damit einher geht eine erhebliche Reduzierung der Herstellungskosten, der Wartungs- und Reparaturanfälligkeit, da die herkömmlichen Kraftspeicher mit den notwendigen Montageschritten am Greifarm nicht mehr benötigt werden. Im Ergebnis werden die Anzahl der Bauteile eines Greifarms und die Ansatzflächen für Keime und Verschmutzungen wie z.B. Oberflächenvertiefungen und Schlitze erheblich reduziert.

In einer vorteilhaften Ausgestaltung der Erfindung weist die Federzunge ein Endstück und einen sich zum Endstück verjüngenden Federzungensteg auf. Dadurch ist die Federzunge bei einer Biegung ausreichend flexibel und gleichzeitig stabil an dem Greifarm angeordnet bzw. ausgebildet, um frühzeitige Risse oder Brüche im Material zu vermeiden. Des Weiteren übernimmt der Federzungensteg aufgrund seiner elastischen Biegefähigkeit hauptsächlich die Funktion des Kraftspeichers, während das Endstück stabil und/oder steif genug ausgebildet ist, um die Kraft gerichtet und ohne Schwankung auszuüben bzw. zu übertragen.

Damit die Federzunge als Schließmittel für das Greifarmpaar dienen kann, müssen die Federzungen der beiden Greifarme miteinander verbunden werden. Hierzu weist die Federzunge, insbesondere deren Endstück, vorteilhafterweise einen Schlitz (oder auch Kerbe/Einschnitt) auf, der ausgebildet ist, mit einer Federzunge, insbesondere deren Schlitz, eines gegengleich ausgebildeten Greifarms der Greifvorrichtung in Wirkeingriff zu kommen. Der Wirkeingriff ist hierbei insbesondere als Kreuzüberblattung ausbildbar.

Es hat sich ebenfalls als vorteilhaft herausgestellt, wenn die Federzunge in axialer Richtung der Bohrung im Wesentlichen die gleiche Breite wie der Greifarm aufweist. Dadurch können die Federzungen nicht ohne weiteres voneinander abrutschen und ihren Wirkeingriff verlieren.

Vorzugsweise ist die Federzunge, insbesondere deren Endstück, im entspannten oder nicht ausgelenkten Zustand von einer dem gegengleich ausgebildeten Greifarm zugewandten Seitenfläche des Greifarms beabstandet. Diese vorteilhafte Ausgestaltung erlaubt es, dass die Federzunge als Öffnungsmittel dienen kann, da sie zum Greifarm hin, insbesondere zu dessen Seitenfläche, ausgelenkt werden kann.

Um verschiedene Steuermittel verwenden zu können, die entweder am Vorderabschnitt oder am Endabschnitt des Greifarms wirken können, ist der Kraftspeicher zwischen der Bohrung und dem Greifabschnitt und/oder zwischen der Bohrung und einem Endabschnitt des Greifarms ausgebildet.

Die Herstellung eines Gegenstands aus Kunststoff ist günstig und schnell. Daher ist der Greifarm vorteilhafterweise einstückig aus insbesondere faserverstärktem Kunststoff gefertigt und somit sofort in einer Greifvorrichtung einsetzbar. Die Faserverstärkung ermöglicht einen Faser-Kunststoff-Verbund aus hoher spezifischer Steifigkeit und Festigkeit. Herkömmliche Greifarme bestehen aus Edelstahl und sind deshalb relativ teuer. Darüber hinaus hat sich im Betrieb der in Rede stehenden Vorrichtungen gezeigt, dass sich die metallischen Greifarme gelegentlich verbiegen, was zum einen beim Betrieb der Vorrichtung schwer erkennbar ist und zum anderen zu Beschädigungen der zu greifenden und transportierenden Behälter und/oder der gegenüberliegenden Greifarme, welche den Behälter übergeben bzw. übernehmen, und/oder anderer Armaturen führen kann. Werden die Greifarme hingegen aus Kunststoff gefertigt, lassen sie sich sehr günstig als Wegwerfartikel im Spritzgussverfahren herstellen. Des Weiteren weist Kunststoff für diesen Einsatz bessere Eigenschaften gegenüber Edelstahl auf, so dass eine Überbeanspruchung des Greifarms nicht zum Verbiegen, sondern zum sofortigen Bruch führt, was keine Folgebeschädigung der Flasche nach sich zieht und ein sofortiges Erkennen des überbeanspruchten Greifarms ermöglicht. Dann kann der Greifarm aufgrund seiner einstückigen Ausbildung sehr rasch und kostengünstig ersetzt werden. Ebenso zeigt Kunststoff im Gegensatz zu herkömmlich verwendetem Metall bzw. Edelstahl kaum Verschleißerscheinungen bei der Reinigung mit Wasser. Durch einen aus Kunststoff geformten Greifarm entsteht ein leicht austauschbares Produkt, dass nach seiner Abnutzung ohne Probleme entfernt und ohne große Kosten oder Lieferzeiten und ohne großen Stillstand der Anlage, deren Bestandteil die Greifvorrichtung ist, ersetzt werden kann.

In einer weiteren vorteilhaften Ausgestaltung weist der Greifabschnitt ein sich von der Unterseite zur Oberseite des Greifarms verjüngendes und/oder stufenförmiges Profil auf. Dies hat den Vorteil, Flaschenhälse und insbesondere Flaschen unterhalb deren Neckring oder Flaschenhalskragen zu greifen und somit stabil transportieren zu können.

Vorzugsweise weist der Greifarm einen integral am Greifarm ausgebildeten und elastisch auslenkbaren Federsteg zum Kompensieren der Kraft und/oder Auslenkung durch das Steuermittel auf, wobei der Federsteg mit dem Greifarm eine geschlossen umlaufende Ausnehmung bildet.

Die Erfindung betrifft ebenfalls eine Greifvorrichtung mit mindestens einem Paar aus einem Greifarm gemäß einer der zuvor genannten Ansprüche und einem gegengleich ausgebildeten Greifarm und mit einem Steuermittel zum Bewegen eines Greifabschnitts des Greifarms von einer Öffnungsstellung in eine Greifstellung oder umgekehrt.

Im Folgenden werden weitere, vorteilhafte Ausgestaltungen der Ausführungsformen des Greifarms und der Greifvorrichtung erläutert:
Das Steuermittel/-einheit kann, wie zuvor beschrieben, als Steuernocken zwischen einem Greifarmpaar ausgebildet sein. Dabei fungiert es abhängig von seiner Positionierung entweder als Öffnungsmittel (Positionierung zwischen Bohrung und Greifabschnitt) oder als Schließmittel (Positionierung zwischen Bohrung und Endabschnitt) der Greifvorrichtung.

Alternativ kann der Greifarm direkt über den Lagerbolzen angesteuert werden, wenn der Greifarm verdrehsicher auf dem Lagerbolzen angeordnet ist. Hierzu ist am oberen oder unteren Ende des drehbar gelagerten Lagerbolzens ein Hebel ausgebildet, durch dessen Betätigung bzw. Drehung gleichzeitig der Greifarm geschwenkt werden kann. Der gegengleich ausgebildete Greifarm wird dabei mit einem eigenen Hebel oder mit einem Verzahnungselement des Lagerbolzens, das mit einem Verzahnungselement des anderen Lagerbolzens in Wirkeingriff steht, synchron angesteuert.

Abhängig davon, ob das Steuermittel als Öffnungsmittel oder Schließmittel ausgebildet ist, fungiert der Kraftspeicher umgekehrt als Schließmittel oder Öffnungsmittel, um die Greifvorrichtung automatisch in eine Ausgangsstellung zu bringen. Die Ausgangsstellung kann abhängig von der Funktion des Kraftspeichers entweder die Greifstellung oder die Öffnungsstellung sein.

Die Federzunge kann geradlinig oder gebogen ausgebildet und entweder in die Richtung des Endabschnitts oder des Greifabschnitts des Greifarms gerichtet sein. Da z.B. in der Greifstellung die Federzungen, insbesondere deren Endstück, im Wesentlichen am Greifarm anliegen, kann die elastische Federkraft dadurch erhöht werden, dass die Federzunge im nicht ausgelenkten bzw. nicht verbogenen Zustand stärker von dem Greifarm weggerichtet ist oder das Endstück von der Seitenfläche des Greifarms weiterweg beabstandet ist.

Anhand der folgenden Zeichnungen wird ein bevorzugtes Ausführungsbeispiel des erfindungsgemäßen Greifarms beschrieben und im Detail erläutert. Es zeigen
- Fig. 1: eine technische Zeichnung die Oberseite eines erfindungsgemäßen Greifarmes;
- Fig. 2: eine technische Zeichnung einer Greifvorrichtung mit den erfindungsgemäßen Greifarmen aus Fig. 1;
- Fig. 3: eine perspektivische Ansicht der Greifvorrichtung aus Fig. 2, sowohl in einer Explosionsansicht als auch in einem zusammengesetzten Zustand; und
- Fig. 4: eine Darstellung der Federzungen in einer weiteren Ausgestaltung von einem erfindungsgemäßen Greifarm aus Fig. 1 bzw. Fig. 2 und einem gegengleich ausgebildeten Greifarm aus Fig. 2, die für eine Kreuzüberblattung geeignet sind.

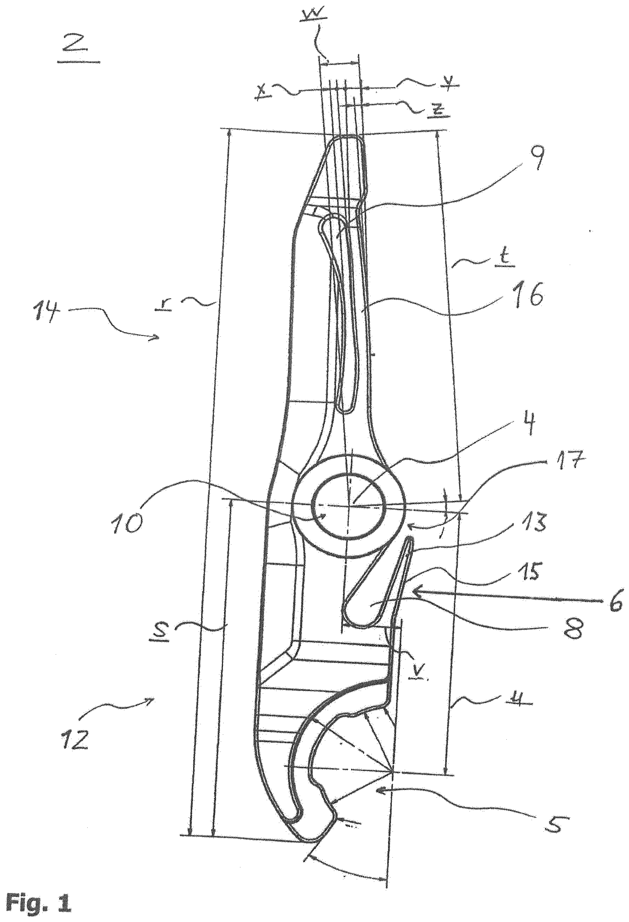

In der perspektivischen Ansicht von Fig. 1 wird ein erfindungsgemäßer Greifarm 2 dargestellt.

Der Greifarm 2 ist vorzugsweise länglich geformt und ist in einen Vorderabschnitt 12 und einen Endabschnitt 14 unterteilt. Der Greifarm 2 ist für eine Vorrichtung zum Greifen, Halten und Führen von insbesondere flaschenartigen Behältern vorgesehen, welche zum Bewegen eines Greifabschnitts 5 des Greifarms 2 von einer Öffnungsstellung in eine Greifstellung einen - hier nicht dargestellten - drehbar gelagerten Steuernocken aufweist. Zwischen den beiden Abschnitten 12 und 14 ist eine Bohrung 10 zur Lagerung eines - hier nicht dargestellten - Lagerbolzens zum schwenkbaren Befestigen des Greifarms 2 in der Vorrichtung angeordnet bzw. liegt auf der Grenze zwischen beiden Abschnitten. Im Vorderabschnitt 12 ist eine Federzunge 6 als ein Öffnungsmittel zum Bewegen des Greifabschnitts 5 des Greifarms 2 von der Greifstellung in die Öffnungsstellung ausgebildet. Zwischen der Federzunge 6 und dem Greifarm 2, insbesondere dem Vorderabschnitt 12, ist eine Ausnehmung 8 ausgebildet, die zum Endstück der Federzunge 6 hin zur Seite des Greifarms 2 offen ist. Diese Öffnung hat eine Breite, die im Wesentlichen die maximale Auslenkung der Federzunge 2 zum Greifarm 2 definiert. Durch das Zusammenwirken des Greifabschnitts 5 mit einem Greifabschnitt eines - hier nicht dargestellten - gegengleich ausgebildeten zweiten Greifarms wird der Greifvorrichtung das Greifen und Halten eines Behälters ermöglicht. Im Endabschnitt 14 ist ein Federsteg 16 zum Abfedern und Ausgleichen der durch den Steuernocken auf den Greifarm 2 ausgeübten Kraft und/oder Auslenkung ausgebildet. Dabei ist der Federsteg 16 integral in einem Endabschnitt 14 des Greifarmkörpers ausgebildet. Der Federsteg 16 bildet mit dem Endabschnitt 14 eine geschlossene Ausnehmung 9, welche dem Federsteg 16 Raum für den erforderlichen Federweg bzw. eine elastische Auslenkung bietet. Der Greifarm 2 ist einstückig aus Kunststoff, vorzugsweise aus faserverstärktem Polyetheretherketon, gefertigt. Der Greifabschnitt 5 weist ein sich von einer Unterseite zu einer Oberseite des Greifarms 2 verjüngendes und stufenförmiges Profil auf. Die Bohrung 10 entspricht einer durchgehenden Bohrung von der Oberseite zur Unterseite des Greifarms 2, hat einen kreisförmigen Querschnitt und definiert eine Schwenkachse 4, die einer Symmetrieachse der Bohrung 10 entspricht. Dabei verläuft die Schwenkachse 4 senkrecht zur Oberseite und zur Unterseite. Der Greifarm 2 ist abgesehen von dem Öffnungsmittel 6 einstückig in einem Spritzgussverfahren aus Kunststoff herstellbar.

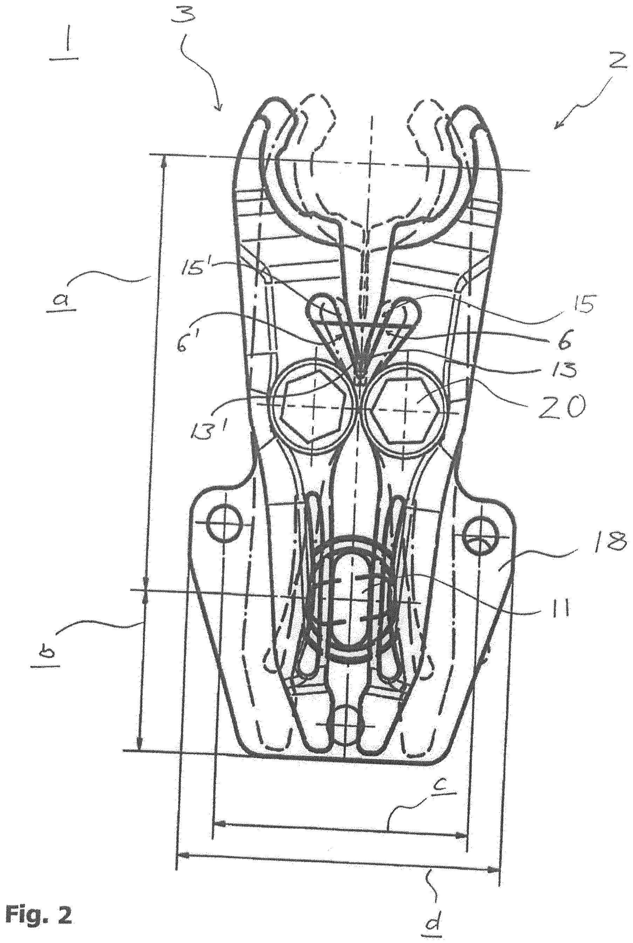

In Fig. 2 wird eine technische Zeichnung einer Greifvorrichtung mit den erfindungsgemäßen Greifarmen aus Fig. 1 gezeigt.

Neben dem Greifarmpaar aus den Greifarmen 2, 3 wird der Steuernocken 11 als Steuermittel, insbesondere Schließmittel, gezeigt, der in einem Trägerelement 18 drehbar gelagert ist und zwischen den Endabschnitten, insbesondere den Federstegen, des Greifarmpaars angeordnet ist. Die Greifarme 2, 3 sind mittels Befestigungsschrauben drehbar gelagert und an dem Trägerelement 18 befestigt. In der Zeichnung wird sowohl die Greifstellung als auch die Öffnungsstellung der Greifvorrichtung gezeigt. In der Greifstellung wirken die Federzungen 6 der Greifarme 2, 3 aufeinander und verbiegen sich hierbei elastisch bzw. üben eine Kraft auf Grund der Auslenkung aufeinander aus. Sobald die Kraft des Steuernockens 11 nicht mehr auf den Endabschnitt der Greifarme 2, 3 wirkt, drücken sich die Federzungen 6, 6' voneinander weg, um ihre ursprünglich geradlinige Form wieder einnehmen zu können.

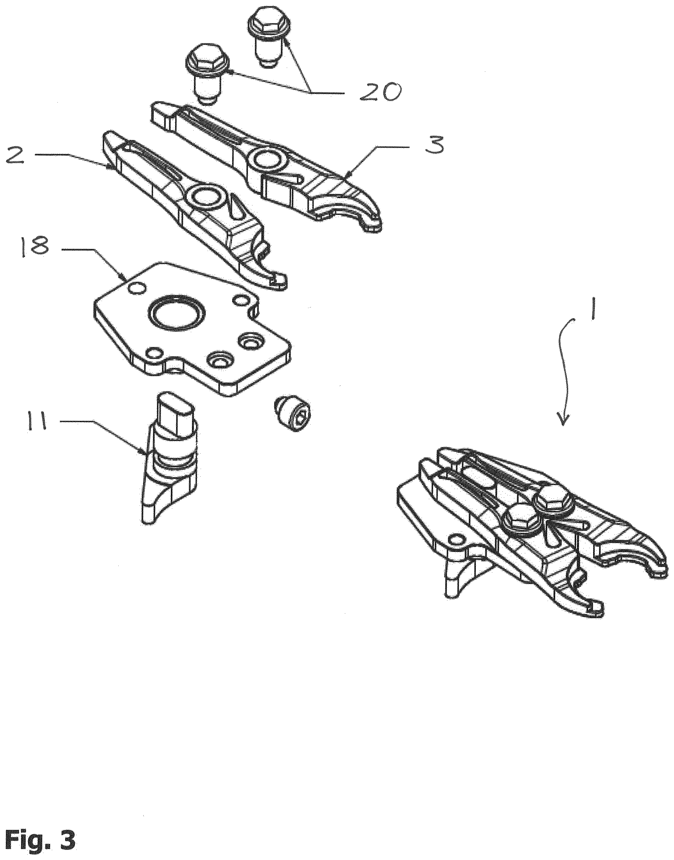

In Fig. 3 wird eine perspektivische Ansicht der Greifvorrichtung aus Fig. 2, sowohl in einer Explosionsansicht als auch in einem zusammengesetzten Zustand. In dem Trägerelement 18 sind zusätzlich die Ausnehmungen erkennbar, in denen der Steuernocken 11 und die Befestigungsschrauben 20 einsetzbar sind. Die Befestigungsschrauben 20 weisen am unteren Teil ein Gewinde zur Befestigung im Trägerelement 18, im mittleren Bereich eine Zylinderform als Lagerung für die Bohrung des Greifarms 2, 3 und am oberen Teil einen Schraubenkopf auf.

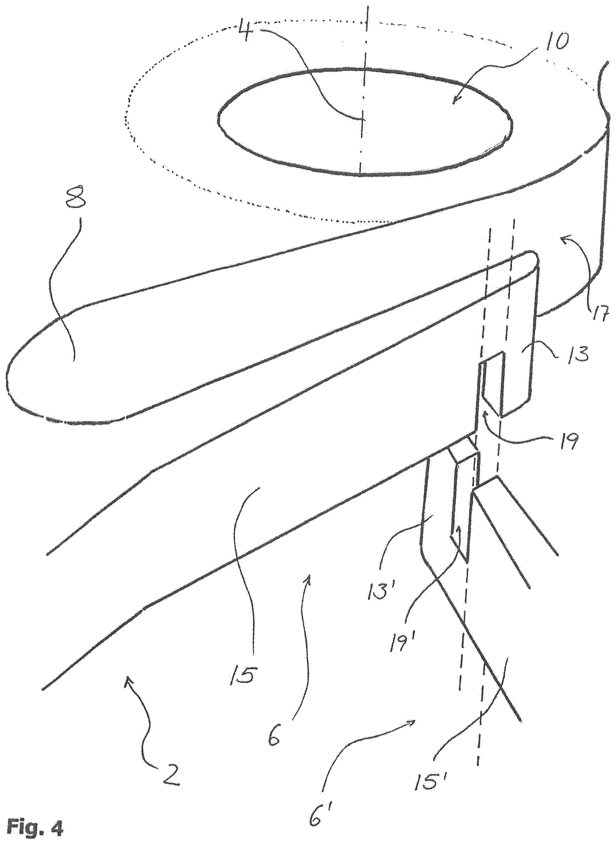

Fig. 4 zeigt eine Darstellung der Federzungen 6, 6' als vorteilhafte Ausgestaltung von einem erfindungsgemäßen Greifarm 2 aus Fig. 1 bzw. Fig. 2 und einem gegengleich ausgebildeten Greifarm 3 aus Fig. 2, die geeignet sind, in Form einer Kreuzüberblattung in Wirkeingriff zu kommen. Durch den Wirkeingriff sind die Federzungen 6, 6' stets miteinander verbunden und können als Schließmittel fungieren. In den Endstücken 13, 13' der Federzungen 6, 6' ist jeweils eine Kerbe/Einschnitt 19, 19' ausgebildet. Die Breite der Kerbe 19 in Richtung der Länge des Federzungenstegs 15 entspricht der Dicke/Tiefe des Endstücks 13' bzw. der Kerbe 19' senkrecht zur Richtung der Länge des Federzungenstegs 15' (siehe parallel laufende, gestrichelte Linien). Das gleiche gilt umgekehrt für die Breite der Kerbe 19'. Da die Federzungen 6, 6' identisch und spiegelverkehrt zueinander ausgebildet sind und die Kerben 19, 19' an der gleichen Position in der Federzunge 6, 6' ausgeformt sind, ist die Dicke und Breite der Kerben 19, 19' in diesem Fall gleich groß bzw. die Grundfläche der Kerben 19, 19' ist quadratisch.

| Abmessungen in Fig. 1 | | Abmessungen in Fig. 2 | |
|---|---|---|---|
| r | 135,47 mm | a | 90 mm |
| s | 64,53 mm | b | 33,2 mm |
| t | 71 mm | c | 57 mm |
| u | 50,36 mm | d | 72 mm |
| v | 10,19 mm | | |
| w | 6,7 mm | | |
| x | 1,2 mm | | |
| y | 2,8 mm | | |
| z | 1,21 mm | | |

### Bezugszeichenliste

- 1: Greifvorrichtung
- 2: Greifarm
- 3: Gegengleich ausgebildeter Greifarm
- 4: Schwenkachse des Greifarms
- 5: Greifabschnitt
- 6: Federzunge von Greifarm 2
- 6': Federzunge von Greifarm 3
- 7: Steuerachse
- 8: Ausnehmung für Federzunge
- 9: Ausnehmung für Federsteg
- 10: Bohrung
- 11: Steuernocken
- 12: Vorderabschnitt
- 13: Endstück von Federzunge 6
- 13': Endstück von Federzunge 6'
- 14: Endabschnitt
- 15: Federzungensteg von Federzunge 6
- 15': Federzungensteg von Federzunge 6'
- 16: Federsteg
- 17: Seitenfläche von Greifarm 2
- 18: Trägerelement
- 19: Kerbe/Einschnitt von Federzunge 6
- 19': Kerbe/Einschnitt von Federzunge 6'
- 20: Befestigungsschraube

## Patentansprüche

1. Greifarm (2) für eine Vorrichtung zum Greifen, Halten und Führen von insbesondere flaschenartigen Behältern, welche zum Bewegen eines Greifabschnitts (5) des Greifarms von einer Öffnungsstellung in eine Greifstellung oder umgekehrt ein Steuermittel (11) aufweist, mit einer Bohrung (10) zur Lagerung eines Lagerbolzens (20) zum schwenkbaren Befestigen des Greifarms (2) in der Vorrichtung, und mit einem Kraftspeicher zum Bewegen des Greifabschnitts (5) des Greifarms von der Greifstellung in die Öffnungsstellung oder umgekehrt,
**dadurch gekennzeichnet, dass**
der Kraftspeicher eine integral am Greifarm ausgebildete und elastisch auslenkbare Federzunge (6) aufweist, die mit einer Federzunge (6') eines gegengleich ausgebildeten Greifarms (3) der Vorrichtung in Wirkeingriff steht oder kommt.

2. Greifarm (2) nach Anspruch 1,
**dadurch gekennzeichnet, dass**
die Federzunge (6) ein Endstück (13) und einen sich zum Endstück (13) verjüngenden Federzungensteg (15) aufweist.

3. Greifarm (2) nach Anspruch 1 oder 2,
**dadurch gekennzeichnet, dass**
die Federzunge (6), insbesondere deren Endstück (13), derart ausgebildet ist, mit der Federzunge (6') des gegengleich ausgebildeten Greifarms (3), insbesondere deren Endstück, in Form einer Kreuzüberblattung in Wirkeingriff zu kommen.

4. Greifarm (2) nach einem der Ansprüche 1 bis 3,
**dadurch gekennzeichnet, dass**
die Federzunge (6) in axialer Richtung der Bohrung (10) im Wesentlichen die gleiche Breite wie der Greifarm (2) aufweist.

5. Greifarm (2) nach einem der Ansprüche 1 bis 4,
**dadurch gekennzeichnet, dass**
die Federzunge (6), insbesondere deren Endstück (13), im entspannten oder nicht ausgelenkten Zustand von einer dem gegengleich ausgebildeten Greifarm (3) zugewandten Seitenfläche (17) des Greifarms (2) beabstandet ist.

6. Greifarm (2) nach einem der Ansprüche 1 bis 5,
**dadurch gekennzeichnet, dass**
der Kraftspeicher zwischen der Bohrung (10) und dem Greifabschnitt (5) und/oder zwischen der Bohrung (10) und einem Endabschnitt (14) des Greifarms (2) ausgebildet ist.

7. Greifarm (2) nach einem der Ansprüche 1 bis 6,
**dadurch gekennzeichnet, dass**
der Greifarm (2) einstückig aus insbesondere faserverstärktem Kunststoff gefertigt ist.

8. Greifarm (2) nach einem der Ansprüche 1 bis 7,
**dadurch gekennzeichnet, dass**
der Greifabschnitt (5) ein sich von der Unterseite zur Oberseite des Greifarms (2) verjüngendes und/oder stufenförmiges Profil aufweist.

9. Greifarm (2) nach einem der Ansprüche 1 bis 8,
**dadurch gekennzeichnet, dass**
der Greifarm (2) einen integral am Greifarm ausgebildeten und elastisch auslenkbaren Federsteg (16) zum Kompensieren der Kraft und/oder Auslenkung durch das Steuermittel (11) aufweist, wobei der Federsteg (16) mit dem Greifarm (2) eine geschlossen umlaufende Ausnehmung (9) bildet.

10. Greifvorrichtung (1) mit mindestens einem Paar aus einem Greifarm (2) gemäß einem der zuvor genannten Ansprüche und einem gegengleich ausgebildeten Greifarm (3), und mit einem Steuermittel (11) zum Bewegen eines Greifabschnitts (5) jedes Greifarms (2, 3) von einer Öffnungsstellung in eine Greifstellung oder umgekehrt.

## Claims

1. A gripper arm (2) for a device for gripping, holding and guiding in particular bottle-like containers comprising a control means (11) for moving a gripping section (5) of the gripper arm from an open position into a gripping position or vice versa, having a bore (10) for the supporting of a bearing pin (20) for pivotably fixing the gripper arm (2) in the device, and an energy store for the moving of the gripping section (5) of the gripper arm from the gripping position into the open position or vice versa,
**characterized in that**
the energy store comprises a spring tongue (6) which is integrally formed on the gripper arm and elastically deflectable, which is or comes into operative engagement with a spring tongue (6') of a gripper arm (3) of a device of mirror-inverted configuration.

2. The gripper arm (2) according to claim 1,
**characterized in that**
the spring tongue (6) comprises an end piece (13) and a spring tongue bar (15) tapering to the end piece (13).

3. The gripper arm (2) according to claim 1 or 2,
**characterized in that**
the spring tongue (6), in particular its end piece (13), is configured so as to come into operative engagement with the spring tongue (6') of the mirror-inverted gripper arm (3), in particular its end piece, as a cross-lap joint.

4. The gripper arm (2) according to one of claims 1 to 3,
**characterized in that**
the spring tongue (6) has substantially the same width in the axial direction of the bore (10) as the gripper arm (2).

5. The gripper arm (2) according to one of claims 1 to 4,
**characterized in that**
the spring tongue (6), in particular its end piece (13) is distanced from a side surface (17) of the gripper arm (2) facing the mirror-inverted gripper arm (3) in the relaxed or non-deflected state.

6. The gripper arm (2) according to one of claims 1 to 5,
**characterized in that**
the energy store is formed between the bore (10) and the gripping section (5) and/or between the bore (10) and an end section (14) of the gripper arm (2).

7. The gripper arm (2) according to one of claims 1 to 6,
**characterized in that**
the gripper arm (2) is produced in one piece from in particular fiber-reinforced plastic.

8. The gripper arm (2) according to one of claims 1 to 7,
**characterized in that**
the gripping section (5) exhibits a tapered and/or stepped profile from the lower side to the upper side of the gripper arm (2).

9. The gripper arm (2) according to one of claims 1 to 8,
**characterized in that**
the gripper arm (2) comprises a spring bar (16) which is integrally formed on the gripper arm and elastically deflectable to compensate the force and/or deflection from the control means, wherein the spring bar (16) forms a closed circumferential recess (9) with the gripper arm (2).

10. A gripping device (1) having at least one pair of a gripper arm (2) according to one of the aforementioned claims and a gripper arm (3) of mirror-inverted configuration and a control means (11) for moving a gripping section (5) of each gripper arm (2, 3) from an open position into a gripping position or vice versa.

## Revendications

1. Bras de préhension (2) pour un dispositif de préhension, de maintien et de guidage de récipients en particulier du type bouteille, qui présente un moyen de commande (11) pour le déplacement d'une portion de préhension (5) du bras de préhension depuis une position ouverte jusqu'à une position de préhension, ou inversement, comprenant un alésage (10) pour le montage d'un tourillon (20) destiné à la fixation pivotante du bras de préhension (2) dans le dispositif, et comprenant un accumulateur d'énergie pour le déplacement de la portion de préhension (5) du bras de préhension depuis la position de préhension jusqu'à la position ouverte, ou inversement,
**caractérisé en ce que**
l'accumulateur d'énergie comporte une languette élastique (6) susceptible d'être déviée élastiquement et réalisée intégralement sur le bras de préhension, laquelle est ou vient en prise active avec une languette élastique (6') d'un bras de préhension (3) du dispositif réalisé de façon complémentaire symétrique.

2. Bras de préhension (2) selon la revendication 1,
**caractérisé en ce que**
la languette élastique (6) possède un embout (13) et une âme de languette (15) qui va en se rétrécissant vers l'embout (13).

3. Bras de préhension (2) selon la revendication 1 ou 2,
**caractérisé en ce que**
la languette élastique (6), en particulier son embout (13), est réalisé(e) de manière à venir en prise active avec la languette élastique (6') du bras de préhension (3) réalisé de façon complémentaire symétrique, en particulier avec son embout, sous la forme d'un chevauchement croisé.

4. Bras de préhension (2) selon l'une des revendications 1 à 3,
**caractérisé en ce que**
la languette élastique (6) a sensiblement la même largeur que le bras de préhension (2) dans la direction axiale de l'alésage (10).

5. Bras de préhension (2) selon l'une des revendications 1 à 4,
**caractérisé en ce que**
la languette élastique (6), en particulier son embout (13), est espacé(e) d'une surface latérale (17) du bras de préhension (2) tournée vers le bras de préhension (3) réalisé de façon complémentaire symétrique, à l'état détendu ou non dévié.

6. Bras de préhension (2) selon l'une des revendications 1 à 5,
**caractérisé en ce que**
l'accumulateur d'énergie est formé entre l'alésage (10) et la portion de préhension (5) et/ou entre l'alésage (10) et une portion d'extrémité (14) du bras de préhension (2).

7. Bras de préhension (2) selon l'une des revendications 1 à 6,
**caractérisé en ce que**
le bras de préhension (2) est fabriqué d'une seule pièce, en particulier en matière plastique renforcée de fibres.

8. Bras de préhension (2) selon l'une des revendications 1 à 7,
**caractérisé en ce que**
la portion de préhension (5) présente un profil qui va en se rétrécissant et/ou de façon étagée depuis le côté inférieur vers le côté supérieur du bras de préhension (2).

9. Bras de préhension (2) selon l'une des revendications 1 à 8,
**caractérisé en ce que**
le bras de préhension (2) comporte une âme élastique (16) susceptible d'être déviée élastiquement et formée intégralement sur le bras de préhension pour compenser la force et/ou la déviation par le moyen de commande (11), l'âme élastique (16) formant un évidement (9) périphérique fermé avec le bras de préhension (2).

10. Dispositif de préhension (1) comportant au moins une paire constituée d'un bras de préhension (2) selon l'une des revendications précédentes et d'un bras de préhension (3) réalisé de façon complémentaire symétrique, et comportant un moyen de commande (11) pour déplacer une portion de préhension (5) de chaque bras de préhension (2, 3) depuis une position ouverte jusqu'à une position de préhension, ou inversement.
